Europäisches Patentamt

European Patent Office

Office européen des brevets

(19)

(11) Publication number: **0 259 917 B1**

# EUROPEAN PATENT SPECIFICATION

(45) Date of publication of patent specification: **08.05.91** (51) Int. Cl.5: **B01D 59/50**

(21) Application number: 87201606.8

(22) Date of filing: 25.08.87

(54) A method of separating the isotopes of uranium hexafluoride by means of laser radiation.

(30) Priority: 26.08.86 NL 8602166

(43) Date of publication of application:
16.03.88 Bulletin 88/11

(45) Publication of the grant of the patent:
08.05.91 Bulletin 91/19

(84) Designated Contracting States:
DE FR GB IT NL

(56) References cited:
US-A- 4 061 921

APPLIED PHYSICS LETTERS, vol. 29, no. 5,
1st September 1976, pages 300-302, Ameri-
can Institute of Physics; M.I. BUCHWALD et
al.: "Direct optically pumped multi-
wavelength CO2 laser"

SOV. J. QUANTUM ELECTRON, vol. 10, no. 8,
August 1980, pages 1038-1041, American In-
stitute of Physics; YU.V. PECHENIN et al.:
"Lasers utilizing CO2 isotopes"

(73) Proprietor: ULTRA-CENTRIFUGE NEDERLAND
N.V.
Planthofsweg 77
NL-7601 PJ Almelo(NL)

(72) Inventor: Ernst, Gerardus Joannes
Wilgenkamp 42
NL-7581 HC Losser(NL)
Inventor: Witteman, Wilhelmus Jacobus
Dolf Nijhoffstraat 14
NL-7552 GR Hengelo(NL)

(74) Representative: Smulders, Theodorus A.H.J.,
Ir. et al
Vereenigde Octrooibureaux Nieuwe Parklaan
107
NL-2587 BP 's-Gravenhage(NL)

## Description

This invention relates to a method of separating the isotopes of uranium hexafluoride by means of laser radiation, which comprises shining the beam of a $CO_2$-laser onto a Raman cell, incorporating parahydrogen as the Ramanactive fluid, whereby the frequency of the beam is shifted, and then using the beam for the isotope-selective excitation of $UF_6$, whereafter the excited $UF_6$ is treated further in known manner to achieve separation of the isotopes.

A method of this kind is generally known and is briefly described, for example, in the Digest of Technical Papers of the Conference on Lasers and Electro-optics, 9-13 June 1986 OSA/IEEE San Francisco, California, pp. 85-86 (paper TUI-2).

As also explained in the above application, the isotopes to be separated are selectively excited by generating molecular vibrations in the 16 $\mu$m range. The excited molecules are more selective for dissociation to $UF_5$ by means of ultraviolet radiation. The $UF_5$ can be separated from the non-dissociated $UF_6$ in known manner. With the 16 $\mu$m radiation, $UF_6$ with the isotope $U^{235}$ is, and with the isotope $U^{238}$ is not excited. What is necessary is a source of 16 $\mu$m radiation that can be tuned in a narrow band.

The source of radiation of 16 $\mu$m used is a $CO_2$ laser. This produces a great amount of radiation in the range between 9 and 11 $\mu$m. By passing the laser beam through a Raman cell using parahydrogen as the active medium, the frequency is shifted, and radiation in the range of 16 $\mu$m results. The production of the accurately determined wavelength in the range of 16 $\mu$m, required for excitation of $UF_6$, has hitherto required a complicated mechanism. Often, a $CO_2$-laser is used, in which it is necessary for the laser medium to be maintained at a high pressure (in the order of 580 kPa) to produce the desired wavelength. The above article, too, refers to a high-pressure laser. In addition, and simultaneously therewith, parametric mixing of four waves is used. The principle of four-wave parametric mixing is known, for example, from IEEE Journal of Quantum Electronics, VOL QE-13, 1977, No. 10, pp. 871-875.

The use of a laser in which a high pressure must be maintained is undesirable from the point of view of generating energy quanta of sufficiently high repetition frequency, and also in view of the manageability of the system, in particular where the laser medium must be circulated.

It is an object of the present invention to improve the prior method to the extent that the radiation in the range of 16 $\mu$m, required for separating the isotopes of uranium hexafluoride is obtained in a simple and well-controlled manner, in which a considerably higher repetition frequency of no less than 1 kHz can be achieved, and four-wave parametric mixing can be done without, as the required energy can now be obtained in a single step.

The above objects are achieved, in accordance with the present invention, by a method using a $CO_2$ laser in which a preponderant portion of the laser medium is $^{12}C^{16}O^{18}O$.

It has been found that the method according to the present invention, using a $CO_2$-laser filled with highly specific $CO_2$, in the manner described, very good isotope separation can be realised without requiring complicated mechanisms with regard to the $CO_2$-laser. In particular, it is no longer necessary to maintain very high pressures of the $CO_2$ in the laser, while yet the desired 16 $\mu$m radiation is produced. Preferably, indeed, in the method according to the invention a $CO_2$-laser is used in which the $CO_2$ in the laser is maintained at a pressure of no more than 98 kPa.

According to the present invention, a $CO_2$-laser is used in which $^{12}C^{16}O^{18}O$ is a preponderant portion of the laser medium. The radiation used in particular is the R (24) rotation transition of the (001)-(I) vibration band. The frequency of this radiation is shifted using a Raman cell, filled with parahydrogen, which is cooled with liquid nitrogen, using the Raman transition between the rotation levels $J = 0$ to $J = 2$. The frequency thus obtained can be accurately tuned in a simple manner by known optical means to radiation having the desired wavelength in the range of 16 $\mu$m at the $CO_2$ pressure in a pressure range to a maximum of 38 kPa.

## Claims

1.  A method of separating the isotopes of uranium hexafloride by means of a laser radiation, which comprises shining the beam of a $CO_2$-laser onto a Raman cell incorporating parahydrogen as the Raman-active fluid, whereby the frequency of the beam is shifted, and then using the beam for the isotope-selective excitation of $UF_6$, whereafter the excited $UF_6$ is treated further in known manner to achieve separation of the isotopes, characterized by using a $CO_2$-laser in which a preponderant portion of the laser medium is $^{12}C^{16}O^{18}O$.

2.  A method as claimed in claim 1, characterized in that the $CO_2$ in the laser is maintained at a pressure of no more than 98 kPa.

## Revendications

1. Un procédé de séparation des isotopes de l'hexafluorure d'uranium au moyen d'un rayonnement laser, qui comprend l'envoi d'un faisceau de laser $CO_2$ sur une cellule de Raman incorporant du parahydrogène en tant que fluide actif de Raman, grâce à quoi la fréquence du faisceau est décalée, et l'utilisation, ensuite, du faisceau pour l'excitation sélective des isotopes de l'$UF_6$, à la suite de quoi le traitement de l'$UF_6$ excitéest poursuivi d'une manière connue pour parvenir à la séparation des isotopes, caractérisé par l'utilisation d'un laser $CO_2$ dans lequel une partie prépondérante du milieu laser est $^{12}C^{16}O^{18}O$.

2. Un procédé selon la revendication 1, caractérisé en ce que le $CO_2$ du laser est maintenu à une pression ne dépassant pas 98 kPa.

## Ansprüche

1. Verfahren zur Isotopentrennung von Uranhexafluorid mit Hilfe einer Laserstrahlung, das umfaßt:
   Aufstrahlen des Strahls eines $CO_2$-Lasers auf eine Raman-Zelle, die Parawasserstoff als das Raman-aktive Fluid enthält, wobei die Frequenz des Strahls verschoben wird, und daraufhin
   Verwenden des Strahls für die Isotop-selektive Erregung von $UF_6$, worauf das erregte $UF_6$ auf bekannte Weise weiterbehandelt wird, um eine Abtrennung der Isotope zu erreichen,
   **gekennzeichnet durch**
   die Verwendung eines $CO_2$-Lasers, in dem ein überwiegender Anteil des Laser-Mediums $^{12}C^{16}O^{18}O$ ist.

2. Verfahren nach Anspruch 1,
   dadurch gekennzeichnet,
   daß das $CO_2$ im Laser bei einem Druck von nicht mehr als 98 kPa gehalten wird.